# EUROPEAN PATENT APPLICATION

(11) **EP 2 897 297 A1**
(43) Date of publication of application: **22.07.2015**
(21) Application number: 14165439.2
(22) Date of filing: 22.04.2014
(51) Int. Cl.: H04B 1/16

(54) **RF module and wireless communication device**

(30) Priority: 15.01.2014 TW 103101380
(71) Applicant: Climax Technology Co., Ltd, Taipei City 114 (TW)
(72) Inventor: Lin, Meng-Chih, 221 New Taipei City (TW); Wang, Chi-Hsiung, 202 Keelung City (TW); Liang, Hsiao-Pin, 110 Taipei City (TW)
(74) Representative: Ter Meer Steinmeister & Partner

(57) **Abstract**

A radio frequency module of a wireless communication device is provided. The radio frequency module is coupled between an antenna and a micro-control unit and includes a radio frequency front-end, a radio frequency integrated circuit, a baseband low-pass filter and a comparator. The radio frequency front-end receives a radio frequency signal through the antenna. The radio frequency integrated circuit receives the radio frequency signal from the radio frequency front-end and converts the radio frequency signal into a baseband signal. The baseband low-pass filter receives the baseband signal from the radio frequency integrated circuit and filters the baseband signal. The comparator compares the filtered baseband signal with a first reference signal and outputs a comparison result signal to the micro-control unit.

## Description

### CROSS REFERENCE TO RELATED APPLICATIONS

This Application claims priority of Taiwan Patent Application No. 103101380, filed on January 15, 2014, the entirety of which is incorporated by reference herein.

### BACKGROUND OF THE INVENTION

### Field of the Invention

The invention relates to an RF (Radio Frequency) module of a wireless communication device, and more particularly to a technology for enhancing sensitivity of the RF module.

### Description of the Related Art

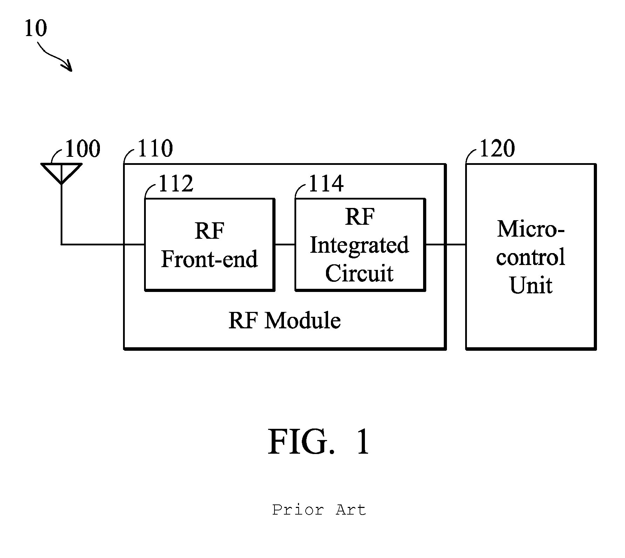

As wireless communication has developed, various electronic devices with the function of wireless communication have also been developed to meet various consumer requirements of consumers. In a wireless communication system, an RF (Radio Frequency) module is used to convert electromagnetic signals received by an antenna into low-frequency signals and transmit the low-frequency signals to back-end units for further processing. In addition, the RF module also converts low-frequency signals transmitted from the back-end units into electromagnetic signals and transmits the electromagnetic signals to the antenna so as to make the antenna transmit the electromagnetic signals to any other wireless communication device. In the wireless communication, RF output power and sensitivity of an RF module of a wireless communication device directly affect the wireless communication distance. FIG. 1 illustrates a block diagram of a wireless communication device 10 according to the prior art. The wireless communication device 10 comprises an antenna 100, an RF module 110 and a micro-control unit 120. The RF module 110 comprises an RF front-end 112 and an RF integrated circuit 114. In the prior art, a PA (Power Amplifier) or an LNA (Low Noise Amplifier) can be inserted into the RF front-end 112 to enhance a wireless communication distance of the wireless communication device.

### BRIEF SUMMARY OF THE INVENTION

In view of this, the object underlying the present invention is to enhance sensitivity of an RF module so as to enhance the wireless communication distance.

This object is achieved by the subject matter of claim 1.

According to the present invention a baseband data recovery circuit is provided in the RF module.

In detail, an embodiment of the invention provides a radio frequency module, coupled between an antenna and a micro-control unit, comprising: a radio frequency front-end, receiving a radio frequency signal through the antenna; a radio frequency integrated circuit, receiving the radio frequency signal from the radio frequency front-end and converting the radio frequency signal into a baseband signal; a baseband low-pass filter, receiving the baseband signal from the radio frequency integrated circuit and filtering the baseband signal; and a comparator, comparing the filtered baseband signal with a first reference signal and outputting a comparison result signal to the micro-control unit.

Another embodiment of the invention provides a wireless communication device, comprising: an antenna; a radio frequency module, coupled to the antenna, comprising: a radio frequency front-end, receiving a radio frequency signal through the antenna; a radio frequency integrated circuit, receiving the radio frequency signal from the radio frequency front-end and converting the radio frequency signal into a baseband signal; a baseband low-pass filter, receiving the baseband signal from the radio frequency integrated circuit and filtering the baseband signal; and a comparator, comparing the filtered baseband signal with a first reference signal and outputting a comparison result signal; and a micro-control unit, coupled to the radio frequency module and receiving the comparison result signal.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
FIG. 1 is a block diagram of a wireless communication device according to the prior art;
FIG. 2 is a block diagram of a wireless communication device according to an embodiment of the invention;
FIG. 3 is a circuit diagram of a baseband low-pass filter and a comparator according to an embodiment of the invention;
FIG. 4 is a diagram of signals in a wireless communication system according to an embodiment of the invention.

### DETAILED DESCRIPTION OF THE INVENTION

This description is made for the purpose of illustrating the general principles of the invention and should not be taken in a limiting sense. In addition, the present disclosure may repeat reference numerals and/or letters in the various examples. This repetition is for the purpose of simplicity and clarity and does not in itself dictate a relationship between the various embodiments and/or configurations discussed. The scope of the invention is best determined by reference to the appended claims.

It is understood that the following disclosure provides many different embodiments, or examples, for implementing different features of the application. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed. Moreover, the formation of a feature on, connected to, and/or coupled to another feature in the present disclosure that follows may include embodiments in which the features are formed in direct contact, and may also include embodiments in which additional features may be formed interposing the features, such that the features may not be in direct contact.

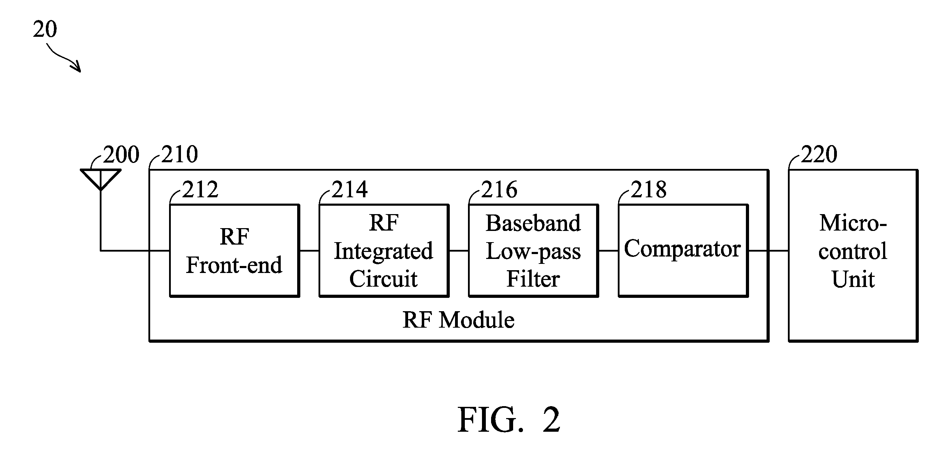

FIG. 2 is a block diagram of a wireless communication device 20 according to an embodiment of the invention. The wireless communication device 20 comprises an antenna 200, an RF module 210 and a micro-control unit 220. In an example, the micro-control unit 220 is configured on a main circuit board, and the RF module is configured on another circuit board, such as a PCBA (Printed Circuit Board Assembly). The antenna 200 is used to transmit an RF signal from the RF module 210 or receive an RF signal from any other wireless communication device and transmit the RF signal back to the RF module 210. The micro-control unit 220 is used to control the RF module 210.

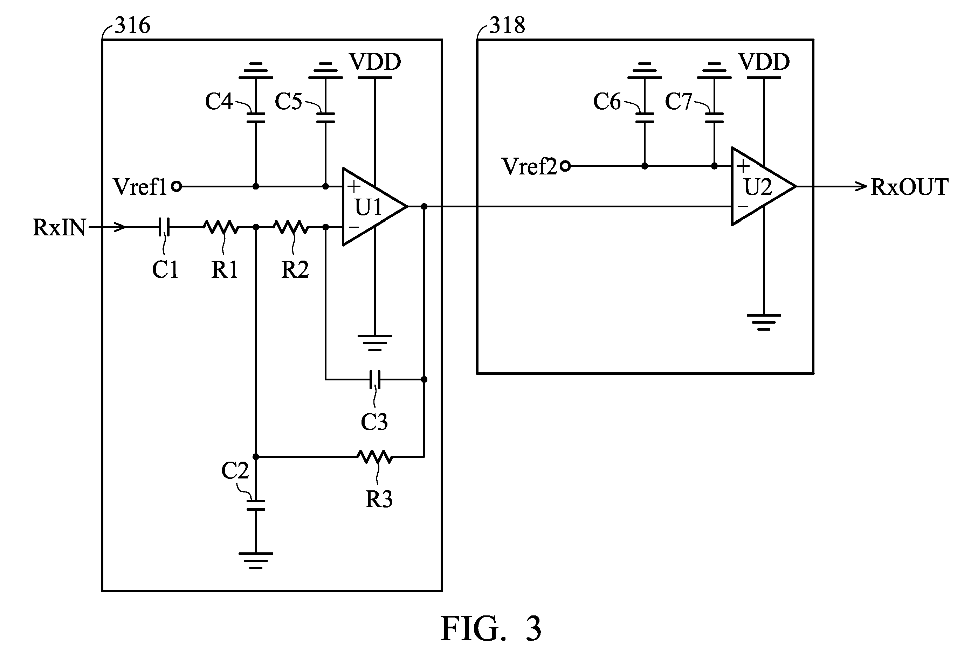

The RF module 210 comprises an RF front-end 212, an RF integrated circuit 214, a baseband low-pass filter 216 and a comparator 218. The RF front-end 212 receives an RF signal from any other wireless communication device through the antenna 200 and transmits an RF signal from the RF integrated circuit 214 to any other wireless communication device through the antenna 200. The RF front-end 212 may comprise RF elements such as a power amplifier, a switching element and a duplexer. The RF integrated circuit 214 generates an RF signal and transmits the generated RF signal to the RF front-end 212. In addition, the RF integrated circuit 214 converts an RF signal from the RF front-end 212 into a baseband signal. For example, the RF integrated circuit 214 performs demodulation or down-conversion on the RF signal from the RF front-end 212 so as to convert the RF signal from the RF front-end 212 into the baseband signal. The baseband low-pass filter 216 filters a baseband signal from the RF integrated circuit 214 and transmits the filtered baseband signal to the comparator 218. The comparator 218 compares the filtered baseband signal with a reference signal and outputs a comparison result signal to the micro-control unit 220. The baseband low-pass filter and the comparator coupled between the RF integrated circuit and the micro-control unit are used to eliminate noise and recover data. In the following, the baseband low-pass filter and the comparator will be described in detail with reference to FIG. 3.

FIG. 3 is a circuit diagram of a baseband low-pass filter 316 and a comparator 318 according to an embodiment of the invention. The baseband low-pass filter 316 comprises a first operational amplifier (op amp) U1, first, second and third resistors R1, R2 and R3, and first to fifth capacitors C1, C2, C3, C4 and C5. A positive power supply terminal of the first op amp U1 is coupled to a power voltage VDD, a negative power supply terminal of the first op amp U1 is coupled to a ground voltage, and a positive input terminal of the first op amp U1 is coupled to a first reference signal Vref1. The first capacitor C1 is a DC blocking capacitor. A first terminal of the first capacitor C1 is coupled to a down-converted baseband signal from the RF integrated circuit 214, that is, a data-unrecovered signal RxIN. A second terminal of the first capacitor C1 is coupled to a first terminal of the first resistor R1. A second terminal of the first resistor R1 is coupled to a first terminal of the second resistor R2. A second terminal of the second resistor R2 is coupled to a negative input terminal of the first op amp U1. The third resistor R3 is coupled between an output terminal of the first op amp U1 and the first terminal of the second resistor R2, forming a feedback path. The second capacitor C2 is coupled between the first terminal of the second resistor R2 and the ground voltage. The third capacitor C3 is coupled between the output terminal and the negative input terminal of the first op amp U1, forming another feedback path. The forth and fifth capacitors C4 and C5 are connected in parallel between the positive input terminal of the first op amp U1 and the ground voltage. As shown in FIG. 3, the baseband low-pass filter 316 is a low-pass filter with a multiple feedback structure. The baseband low-pass filter 316 filters the data-unrecovered signal RxIN to eliminate frequency bands of noise waveforms from the data-unrecovered signal and retain frequency bands of the required data waveform. A transfer function of the baseband low-pass filter 316, comprising a gain and a cutoff frequency, can be designed according to the data rate and cutoff frequencies of the baseband signal. That is, values of the resistors and capacitors of the baseband low-pass filter 316 can be designed according to the data rate and noise frequencies of the baseband signal so as to achieve the required transfer function of the baseband low-pass filter 316. Since the baseband low-pass filter 316 comprises the DC blocking capacitor C1, the practical transfer function of the baseband low-pass filter 316 is a low-pass filtering transfer function in which low-frequency gains are slightly reduced.

The comparator 318 comprises an open-loop op amp U2 and sixth and seventh capacitors C6 and C7. A positive power supply terminal of the op amp U2 is coupled to the power voltage VDD, a negative power supply terminal of the op amp U2 is coupled to the ground voltage, a negative input terminal of the op amp U2 is coupled to a second reference signal Vref2, and a negative input terminal of the open-loop op amp U2 is coupled to the output terminal of the op amp U1. The sixth and seventh capacitors C6 and C7 are connected in parallel between the positive input terminal of the op amp U2 and the ground voltage. The comparator 318 compares the output signal of the baseband low-pass filter 316 with the second reference signal Vref2 and outputs a comparison result signal, that is, a data-recovered signal RxOUT, to the micro-control unit. In other words, the comparator 318 performs an analog-to-digital conversion on the output signal of the baseband low-pass filter 316 according to the second reference signal Vref2 so as to recover the required data waveform from the signal which is round-cornered (dull) after being filtered by the baseband low-pass filter 316. The second reference signal Vref2 can be designed according to the amplitude of the baseband signal and the required data waveform.

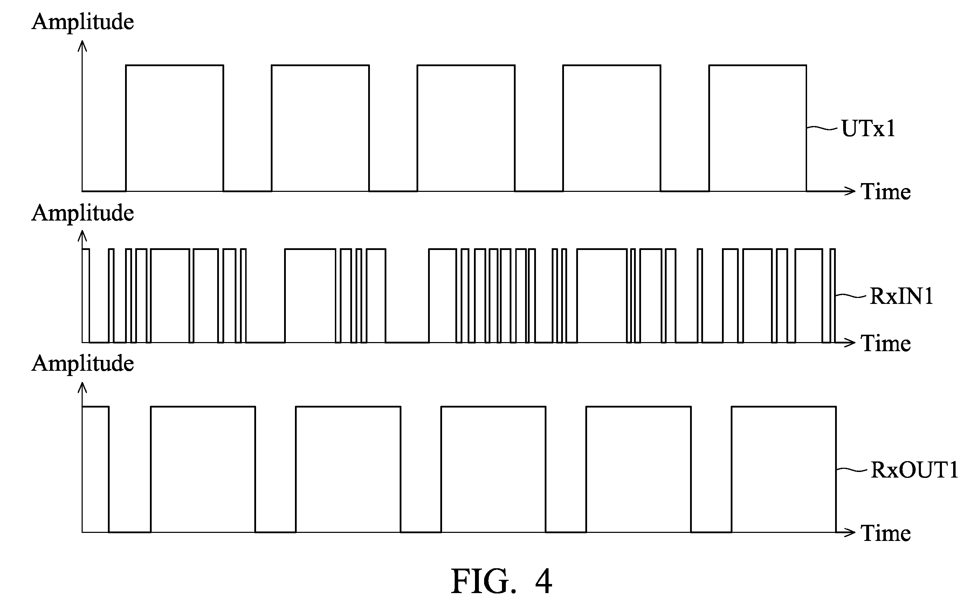

The effect of the invention will be described in the following with reference to FIG. 4. FIG. 4 is a block diagram of signals in a wireless communication system according to an embodiment of the invention. The wireless communication system comprises a transmitting wireless communication device Tx and a receiving wireless communication device Rx. An unconverted transmitting signal UTx1 is a baseband signal which is to be transmitted by the transmitting wireless communication device Tx and has not been up-converted. The transmitting wireless communication device Tx converts the unconverted transmitting signal UTx1 into an RF signal and transmits the RF signal to the receiving wireless communication device Rx, such as the wireless communication device 20 in FIG. 2, through an antenna. A data-unrecovered signal RxIN1 is a baseband signal which is down-converted from the RF signal from the transmitting wireless communication device Tx by the receiving wireless communication device Rx and has not been data-recovered. The data-unrecovered signal RxIN1 is equal to a signal at the input terminal of the baseband low-pass filter. A data-recovered signal RxOUT1 is a signal which is data-recovered from the data-unrecovered signal RxIN1 by a baseband low-pass filter and a comparator of the receiving wireless communication device Rx and to be transmitted to a micro-control unit of the receiving wireless communication device Rx. As shown in FIG. 4, compared to the data-unrecovered signal RxIN1, high-frequency noise is eliminated from the data-recovered signal RxOUT1 and the waveform of the data-recovered signal RxOUT1 is close to the waveform of the unconverted transmitting signal UTx1 of the transmitting wireless communication device Tx.

According to the baseband low-pass filter and the comparator coupled between the RF integrated circuit and the micro-control unit in the invention, the sensitivity of the RF module can be enhanced. In an example, the sensitivity of the RF module can be enhanced from -100 dBm to -110 dBm. Furthermore, according to the baseband low-pass filter and the comparator coupled between the RF integrated circuit and the micro-control unit in the invention, the adjacent channel selectivity can also be improved. Since the sensitivity of the RF module is enhanced, the wireless communication distance is also enhanced. In an example of the invention, the wireless communication distance can have about 200% enhancement, and thereby enhancing the wireless communicable distance among wireless communication devices.

While the invention has been described by way of example and in terms of preferred embodiments, it is to be understood that the invention is not limited thereto. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A radio frequency module (210), coupled between an antenna (200) and a micro-control unit (220), comprising:
a radio frequency front-end (212), receiving a radio frequency signal through the antenna (200); and
a radio frequency integrated circuit (214), receiving the radio frequency signal from the radio frequency front-end (212) and converting the radio frequency signal into a baseband signal;
**characterized by** a baseband low-pass filter (216), receiving the baseband signal from the radio frequency integrated circuit (214) and filtering the baseband signal; and
a comparator (218), comparing the filtered baseband signal with a reference signal (Vref2) and outputting a comparison result signal (RxOUT) to the micro-control unit (220).

2. The radio frequency module (210) as claimed in claim 1, wherein the baseband low-pass filter (216) comprises:
a first operational amplifier (U1), comprising a first positive input terminal coupled to another reference signal (Vref1), a first negative input terminal and a first output terminal coupled to the comparator (318);
a first capacitor (C1), wherein a first terminal of the first capacitor (C1) is coupled to the baseband signal;
a first resistor (R1), wherein a first terminal of the first resistor (R1) is coupled to a second terminal of the first capacitor (C1);
a second resistor (R2), wherein a first terminal of the second resistor (R2) is coupled to a second terminal of the first resistor (R1) and a second terminal of the second resistor (R2) is coupled to the first negative input terminal;
a third resistor (R3), coupled between the first output terminal and the first terminal of the second resistor (R2);
a second capacitor (C2), coupled between the first terminal of the second resistor (R2) and a ground voltage; and
a third capacitor (C3), coupled between the first output terminal and the first negative input terminal.

3. The radio frequency module (210) as claimed in claim 2, wherein the comparator (318) comprises:
an open-loop second operational amplifier (U2), comprising a second positive input terminal coupled to the reference signal (Vref2), a second negative input terminal coupled to the first output terminal and a second output terminal coupled to the micro-control unit (220).

4. The radio frequency module (210) as claimed in claim 3, wherein the baseband low-pass filter (316) further comprises a fourth capacitor (C4) and a fifth capacitor (C5) connected in parallel between the first positive input terminal and the ground voltage, and the comparator (318) further comprises a sixth capacitor (C6) and a seventh capacitor (C7) connected in parallel between the second positive input terminal and the ground voltage.

5. The radio frequency module (210) as claimed in claim 1, wherein the micro-control unit (220) is configured on a first circuit board and the radio frequency module (210) is configured on a second circuit board.

6. A wireless communication device (20), comprising:
an antenna (200);
a radio frequency module (210) as claimed in any one of the preceding claims; and
a micro-control unit (220), coupled to the radio frequency module (210) and receiving the comparison result signal (RxOUT).
